(19) **Europäisches Patentamt / European Patent Office / Office européen des brevets**

(11) **EP 4 073 539 B1**

(12) **EUROPEAN PATENT SPECIFICATION**

(45) Date of publication and mention
of the grant of the patent:
**06.12.2023 Bulletin 2023/49**

(21) Application number: **20817416.9**

(22) Date of filing: **09.12.2020**

(51) International Patent Classification (IPC):
*G01S 5/24* *(2006.01)*   *G01S 3/801* *(2006.01)*
*G01S 3/808* *(2006.01)*   *A01D 34/00* *(2006.01)*

(52) Cooperative Patent Classification (CPC):
**G01S 5/24; A01D 34/008; G01S 3/801;
G01S 3/8083**

(86) International application number:
**PCT/EP2020/085243**

(87) International publication number:
**WO 2021/116160 (17.06.2021 Gazette 2021/24)**

(54) **LOCATION DETERMINATION SYSTEM, METHOD FOR DETERMINING A LOCATION AND DEVICE FOR DETERMINING ITS LOCATION**

ORTSBESTIMMUNGSSYSTEM, VERFAHREN ZUR ORTSBESTIMMUNG UND VORRICHTUNG ZUR ORTSBESTIMMUNG

SYSTÈME ET PROCÉDÉ DE DÉTERMINATION D'EMPLACEMENT D'UN DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2019 NL 2024416**

(43) Date of publication of application:
**19.10.2022 Bulletin 2022/42**

(73) Proprietor: **FOCCAERT Y. BVBA
3080 Tervuren (BE)**

(72) Inventors:
• **FOCCAERT, Yves Chrétien
3080 Tervuren (BE)**
• **DE ROO, Auke Jan
7544 DB Enschede (NL)**
• **PEEZENKAMP, Wilfried Remco Mathijs
7555 AK Hengelo (NL)**

(74) Representative: **Arnold & Siedsma
Bezuidenhoutseweg 57
2594 AC The Hague (NL)**

(56) References cited:
**EP-A1- 2 565 667    WO-A1-2014/102931
WO-A2-2012/137017**

**Description**

The invention relates to a location determination system for determining a location of a device within a predetermined space.

A location determination system is known, from BE1024053, which has a series of anchors at known locations sending signals at know times. Measuring the time of flight of the signals from the anchors to the device gives a measure for the distance of the anchor to the device. By determining the distance of the device to several anchors, a location of the device with respect to the anchor is determined via multilateration.

The known system has the drawback that it provides a limited accuracy in determining the location. In particular, achieving an accuracy of e.g. 10 - 20 cm is impossible or at least impractical and/or costly using said system. As a result, the known system is unsuitable for use in e.g. a navigation system of an automatically guided vehicle (AGV), such as a self driving lawn mower.

Another positioning system is also known from WO 2014/102931 A1, which discloses a positioning system provided with: a plurality of base stations that transmit ultrasonic signals; and a mobile station that includes a receiver for receiving the ultrasonic signals transmitted from the base stations. The mobile station includes a position acquiring unit that acquires at least a position of the mobile station on the basis of the ultrasonic signals transmitted from the base stations and received by means of the receiver.

EP 2 565 667 A1 on the other hand, discloses an apparatus for providing direction information based on a reproduced audio signal with an embedded watermark. The apparatus comprises a signal processor, which is adapted to process at least two received watermarked audio signals recorded by at least two audio receivers at different spatial positions. The signal processor is adapted to process the received watermarked audio signals to obtain a receiver-specific information for each received watermarked audio signal. The receiver-specific information depends on the embedded watermarks embedded in the received watermarked audio signals. Moreover, the apparatus comprises a direction information provider for providing direction information based on the receiver-specific information for each received watermarked audio signal.

Finally, static transmitter stations are known from WO 2012/137017 A2, which are used to determine the position of a mobile receiver unit. Each transmitter station transmits an ultrasonic signal comprising a transmitter-specific phase-shifting signature. The receiver unit receives a signal and identifies a transmitter station by its signature. It uses the received signal and the identity of the source transmitter station to determine the position of the mobile receiver unit. The signature may comprise two patterns phase-shift-key-encoded on respective carrier signals of the same frequency but different phase, with the patterns being offset from each other by a transmitter-specific offset. The signal from the transmitter station may also include a PSK-encoded message. It is an object of the invention to provide an improved location determination system, e.g. with an improved accuracy. Additionally or alternatively, it may be an object of the invention to provide a location determination system suitable for AGV's, in particular for self driving lawn mowers, preferably having an accuracy of at least 10 - 20 cm.

This object is achieved by a device according to claim 1 and a location determination system for determining a location of a device within a predetermined space, having the features of claim 2. Advantageous features of the system are defined in the dependent claims.

Such a location determination system has the advantage that location of a device may be determined therewith, in particular relatively accurately, more in particular with an accuracy of at least 10 or 20 cm.

Accuracy is quantified by a measure of error, where an increased accuracy corresponds to a numerical representation of the error which is lower. As an example, an accuracy of 5 cm is higher than an accuracy of 10 cm. Thus, an accuracy of at least 10 or 20 cm may be an accuracy of e.g. 0 - 10 cm or 0 - 20 cm respectively, such as 5 cm or 15 cm.

Additionally or alternatively, such a location determination has the advantage that no synchronization between the device and the speakers is necessary. In other words, the speakers and device need not share a common clock and no synchronization signal is required.

The predetermined sounds being unique is understood to mean that the sounds are at least unique to the speakers which are part of said location determination system. As an example, speakers belonging to different location determination systems, may produce identical sounds without problem and without departing from the invention.

The predetermined sounds may be stored digitally. In particular, it has been found that a sound represented with a bitrate of 192,000 kbit/s can be used. A 16 bit precision per sample may be used.

The sounds may be ultrasonic, in particular having frequencies of above 20 kHz. In particular, each sound may have one or more frequencies of between 40 and 50 kHz.

The sounds may be of suitable length, e.g. of approximately 10 ms long. It is possible to make the sounds longer, which may increase accuracy but also the required calculation effort when comparing the sounds, whilst reducing the length may require less calculation, at an accuracy penalty.

The information relating to a location of the speakers, may be any information allowing the processor to determine the position of the device in the space, for instance in relation to the speakers. In particular, the information corresponds to the location of the respective speaker, for example with respect to said space, a chosen point within said space, or of speakers with respect to each other. The information may indicate the location of the speakers in a two or three dimensional axis system, such as a Euclidean X-Y grid or X-Y-Z-grid. Moreover, the information relating to the location may be determined in a set-up procedure of the location determination system and/or of the device not further described herein.

The location determination system according to the invention may be used in providing a location of an AGV, such as a lawn mower. In particular, the location determined by the location determination system may be used by an AGV to plan a route to guide the AGV along. More in particular, the determined location may be used by a self-driving lawn mower to determine an advantageous or optimal route to mow a predefined patch of grass. The advantageous or optimal route may avoid passing over a same section of said patch of grass more than is desired, e.g. more than once or twice. This may be especially advantageous in case the self-driving lawn mower is battery powered, since in that case passing the same section of said patch of grass more then once may be considered wasting battery power, requiring the lawn mower to recharge more often or to have a large battery in order to provide a sufficient capacity.

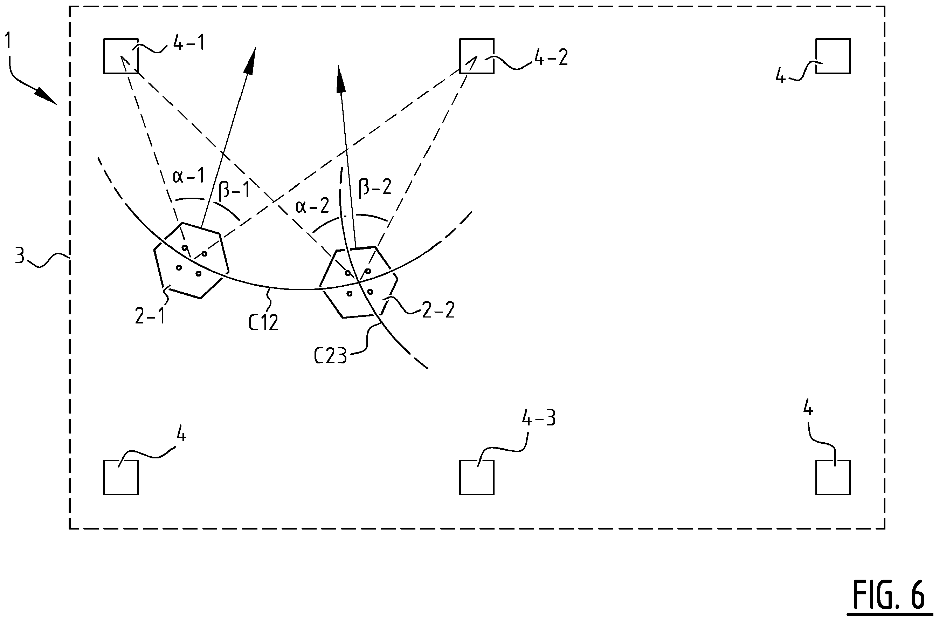

In the multiangulation step, the processor may use the difference in arrival time to determine an orientation of the device with respect to a speaker which produced the sound which was compared with the fingerprints. An example of multiangulation in a specific situation is discussed later in relation to figure 6. Using the information relating to the location of that speaker, a series of possible locations may be determined for the device, with respect to that speaker. By doing the same for another one or more speakers, the series of possible locations may be shortened. Preferably after shortening the series of possible locations, only one possible location is left, which is then the location of the device. If a few possible locations are left, an intermediate or average location may be chosen as the location of the device. Alternatively, one of the possible locations may be chosen as the location of the device.

The series of possible locations of the device may be shortened also by cross-referencing said series with a white and/or black list of locations for the device. Said white and/or black list may for example be based on a recent or historic location of the device, or on a preprogrammed set of locations, e.g. corresponding to the predefined space.

In an embodiment of the location determination system according to the invention, the comparison comprises convolution and/or cross-correlation.

Using convolution and/or cross-correlation the similarity of the fingerprints and the received signals may be determined relatively accurately. Moreover, using convolution and/or cross-correlation, an arrival time of a signal may be determined relatively accurately. Even further, using cross-correlation and/or convolutions is effective even if the signal corresponding to the received sound contains noise and/or other sounds. After all, the noise and/or other sounds in the signal corresponding to the received sound are not present in the fingerprint. Said noise and/or other sounds do therefore not contribute to similarity of the fingerprint and the signal, and are therefore filtered by using cross-correlation and/or convolution. Accordingly, these functions provide a method of filtering the received sounds.

Cross-correlation is a measure of similarity of two series as a function of the displacement of one relative to the other, in casu the fingerprint and the received signal. This is also known as a sliding dot product or sliding inner-product. It can be used for searching a long signal, in casu the signal corresponding to the received sound, for a shorter, known feature, in casu the fingerprint. The cross-correlation for a real valued discrete signal is defined as:

$$(f \star g)[n] \triangleq \sum_{m=-\infty}^{\infty} f[m]g[m+n]$$

with (f*g)[n] being the cross-correlation output, which is a measure for similarity, for a shift n in the m-axis, wherein f[m] is the value of the first signal at discrete point m and g[m+n] is the value of the second signal at discrete point m shifted with n. Thus, the cross correlation outputs a value representative of similarity for two functions f and g for each shift n.

For the same symbols, convolution also provides a measure for similarity as follows:

$$(f * g)[n] \triangleq \sum_{m=-\infty}^{\infty} f[m]g[n-m]$$

In practice f and g are defined in a certain interval, so that the sum operators above can span only that interval.

As an alternative to cross-correlation or convolution, any other function providing a measure of similarity for two signals given a shift of these signals can be used for practicing the invention.

It is noted that the arrival time may be relative to a time or clock of at least the device. In particular, the arrival time is not measured relative to a time outside of the location determination system, e.g. a time of day, nor is the arrival time measured relative to a time or clock common to the device and the speakers. In particular, the device receives no information indicating when the respective speakers produced the predetermined sounds.

In another embodiment of the location determination system according to the invention, determining the difference in arrival time of a sound comprises: determining an arrival time of said sound at a first microphone of said pair based on a maximal value of the convolution and/or cross-correlation; and determining an arrival time of said sound at a second microphone of said pair based on a maximal value of the convolution and/or cross-correlation.

By determining the arrival time using the maximal value of the convolution and/or cross-correlation, the arrival time of a received signal at a microphone may be determined relatively accurately. Therefore, a difference in arrival times may be determined relatively accurately. Accordingly, the orientation of the device with respect to the speaker producing the sound may be determined more accurately, which leads to a relatively accurate location determination.

In yet another embodiment of the location determination system according to the invention, the processor is further configured to continuously compare the received signals with the retrieved fingerprints.

By continuously comparing the signals with retrieved fingerprints, a sound may be compared with a fingerprint when or shortly after it is received. Accordingly, a new arrival time can be calculated quickly, so that a quick determination of a difference in arrival time, an orientation of the device with respect to the speaker, and ultimately the location of the device. Thus, in this embodiment the location of the device may updated relatively often and/or quickly after a sound has been received.

Continuously may herein indicate that the processor is not configured to wait for any instruction before starting comparing. Moreover, the processor may be configured not to pause comparing, even if no sound is being received at a microphone or any of the microphones. Thus, continuously may herein mean that the processor is configured to perform the comparison or part thereof every clock cycle.

The processor may be further configured to threshold the result of the convolution and/or cross-correlation, in order to only calculate an arrival time if the received signal is sufficiently similar to a fingerprint.

Thresholding the result of the convolution and/or cross-correlation may involve only determining the arrival time of a sound when the cross-correlation and/or convolution gives a value for similarity exceeding a predefined threshold value or magnitude.

In yet another embodiment of the location determination system according to the invention, the at least two speakers are configured to produce the sounds at regular intervals.

If the speakers produce sounds repeatedly, i.e. in intervals, no communication is needed between the device and the speakers for determining a location of the device. Accordingly, the speakers may be of relatively simple design, possibly making the speakers less prone to errors and/or damage and/or more cost efficient. The regular interval may be 10 Hz.

As an alternative, the at least two speakers may be configured to produce sounds at irregular intervals. Thus, the at least two speakers may be configured to produce the sounds repeatedly.

Practically, the processor is connected to each output via a single analog-to-digital converter or via an analog-to-digital converter for each output, to convert an analog signal from the microphones to a digital signal for the processor. The separate analog-to-digital converters may have a sample frequency of 500 kHz. The single analog-to-digital converter may have a sample frequency equal to that of the amount of outputs connected to it multiplied by the desired sampling frequency for each output, e.g. 2 MHz for a sampling frequency of 500 kHz for 4 signals to be sampled.

Using an analog-to-digital converter for each output avoids irrecoverably mixing the signals provided at each output. The same can be achieved using a single analog-to-digital converter, for instance in combination with a multiplexer.

In yet another embodiment of the location determination system according to the invention, the at least two microphones comprise three or four microphones.

It has been found that a device with three or four microphones may provide a relatively high accuracy of a two or three dimensional location estimate respectively.

In yet another embodiment of the location determination system according to the invention, the memory is further configured to store information relating to the mutual position of the at least two microphones. Said information may be retrieved by the processor and used for determining the location of the device.

When information on the mutual position of the microphones is known, this information need not be deduced from the differences in arrival times of sounds. As this would introduce error margins into the location determination, this embodiment may increase the accuracy of the determined location by eliminating these errors.

In yet another embodiment of the location determination system according to the invention, the location determination system includes a temperature sensor configured to output a temperature signal corresponding to a measured temperature, wherein the processor is further configured to determine, based on the temperature signal, a parameter corresponding to the propagation speed of sound at the measured temperature, and perform the multiangulation using said parameter.

The speed of sound is dependent on the temperature of the air between the microphones. Using the temperature sensor, a measure for the speed of sound can be determined that is relatively close to the actual speed of sound. Using this more accurate propagation speed of sound may increase the accuracy of the multiangulation. The propagation speed of sound may be determined based on the temperature using a lookup table or a preprogrammed formula. As an alternative to using the temperature sensor for obtaining the parameter for the propagation speed of sound, a predetermined propagation speed of sound may be used, possibly at the cost of accuracy.

The invention also relates to a method for determining a location of a device within a predetermined space, according to claim 11.

The method may offer the above described advantages relating to the location determination system. The method may use a system according to the invention, for instance with a device according to the invention, in particular the system or device with any of the above described features, alone or in any suitable combination.

The invention will be further elucidated with reference to the appended drawings, wherein:

Figure 1 is a schematic representation of the location determination system according to the invention;
Figure 2 is a schematic representation of the device of the location determination system of figure 1.
Figures 3A and 3B are representations of one fingerprint of a unique predetermined sound to be produced by a speaker of the location determination system of figure 1;
Figure 4 is a representation of a signal received at an output of a microphone in the location determination system of figure 1;
Figures 5A and 5B are representations of the result of a cross-correlation of the signal of figure 4 with the sound of figure 3B; and
Figure 6 schematically represents the system of figure 1 in a specific situation.

Throughout the figures, like elements are referred to using like reference numerals.

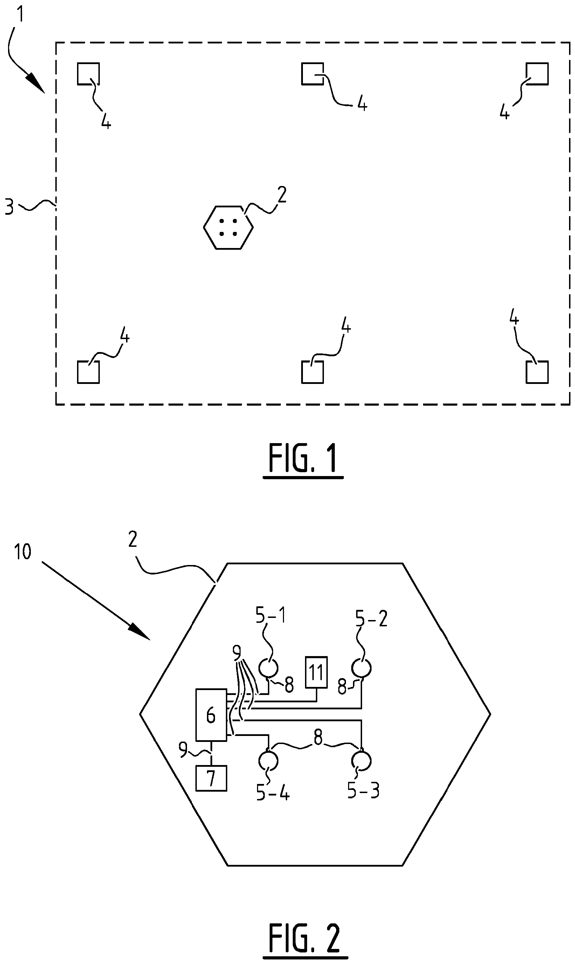

Figure 1 shows a location determination system 1 for determining a location of a device 2 within a space 3. The location determination system 1 comprises six speakers 4. Another number of speakers 4, such as two, three or more, could also have been used. Each speaker 4 is configured to produce a unique predetermined sound in said space 3.

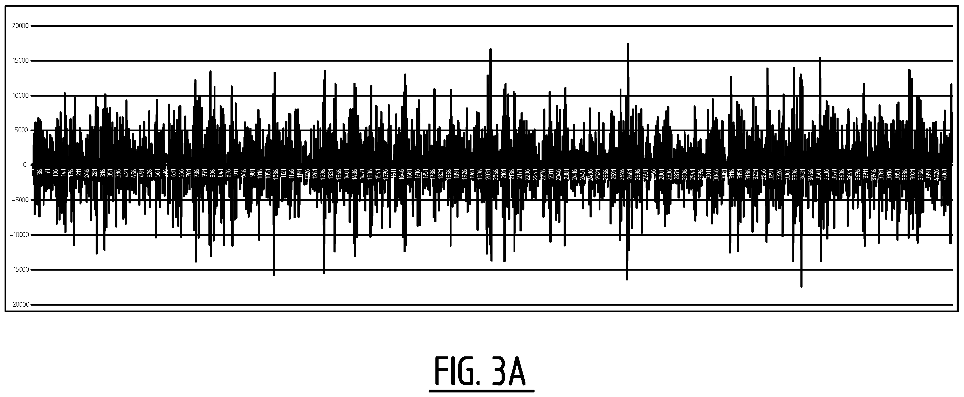

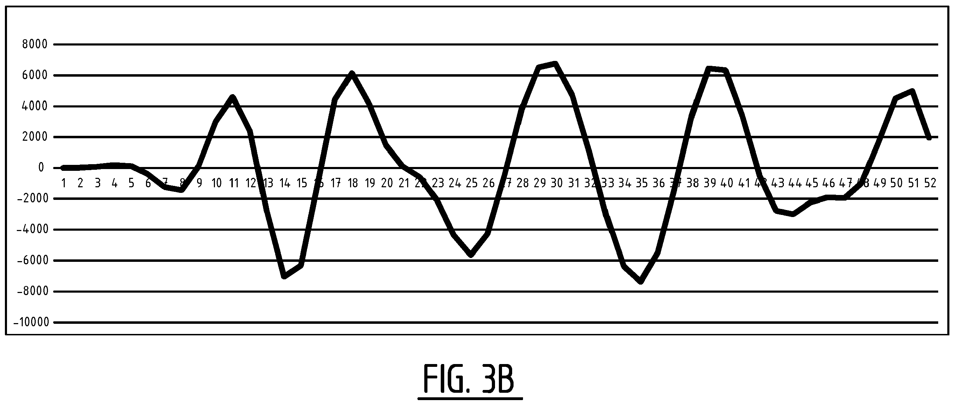

Figures 3A and 3B show a fingerprint of such a predetermined sound. A fingerprint may herein be understood as a digital representation of a sound. In particular, the fingerprint is a list of numeric values representing an amplitude of the sound at predetermined intervals. The fingerprint can thus be regarded as a discrete sample of the sound. Using the fingerprint, the sound can be reproduced at least to a certain degree of accuracy. In figures 3A and 3B, the intervals of the fingerprint have been numbered and are shown on the horizontal axis. The vertical axis of figures 3A and 3B represents the numeric value corresponding to the amplitude of the sound at that interval. Figure 3B only shows a part of the data of figure 3A. One speaker 4 of the location determination system 1 of figure 1 is configured to produce a sound with the fingerprint shown in figures 3A and 3B.

The other speakers 4 are configured to produce other predetermined sounds, which are mutually different. Accordingly, each speaker 4 is configured to produce a sound unique to that speaker 4. In this case, the speaker produces the same unique sound regularly ten times every second. In order to produce its unique predetermined sound, each speaker 4 may have a memory into which a fingerprint of its unique predetermined sound is stored.

As shown in figure 2, the device 2 comprises four microphones 5-1 to 5-4. Another number of microphones 5 could have been used, such as two, three or more. The microphones 5-1 - 5-4 have a mutual interspacing, i.e. they are at a distance from each other. The device 2 also comprises a processor 6 and a memory 7. The microphones 5-1 - 5-4 are configured for providing a signal corresponding to received sound at their respective outputs 8. When a speaker 4 produces a sound, the sound can be received by each of the microphones 5-1 - 5-4, the microphones 5-1 - 5-4 are configured to provide a signal at their outputs 8 corresponding to the sound received.

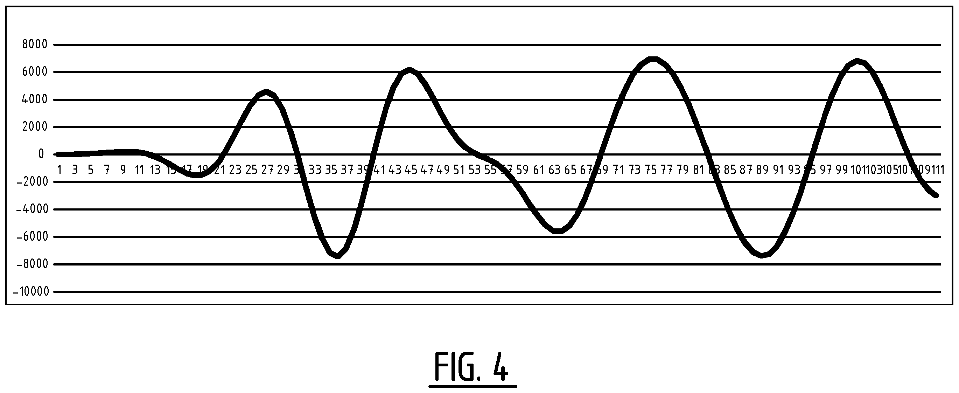

Figure 4 shows a representation of such a signal. The representation is achieved by sampling an analog signal provided by a microphone 5-1 - 5-4 at its output 8 which is generated in response to the sound using an analog-to-digital converter (not shown) with a sampling frequency of 500 kHz.

The sampled signal is plotted in figure 4 with sample numbers on the horizontal axis and a value representing the amplitude of the signal on the vertical axis. A similarity can be seen between figure 4 and figure 3B, as they are both representations of the same sound, before producing the sound by the speaker 4 (figure 3B) and after being received by a microphone 5-1 - 5-4 and sampled (figure 4). Because the signal of figure 4 relates to sound received by a microphone 5-1 - 5-4, it may include noise present in the environment of the microphone 5-1 - 5-4, and picked up by it. Multiple sounds may be received by a single microphone 5-1 - 5-4 at the same time, or may partially overlap each other.

The memory 7 of the device 2 stores a fingerprint of a sound produced by, and information relating to a location of, each speaker. The memory 7 further stores information relating to the mutual position of the microphones 5-1 - 5-4. The processor 6 is connected to the outputs 8 of the microphones 5-1 - 5-4 and to the memory 7 via data carrying connections 9. The data carrying connections 9 are preferably wired, but may also be wireless.

The processor 6 is configured to determine the location 6 of the device 2 in the space 3. For this purpose, the processor 6 is configured to, for each sound, based on a comparison of signals received from the outputs 8 with fingerprints retrieved from the memory 7, a difference in arrival time for each pair of said at least two microphones 5-1 - 5-4, and to determine, based on the differences in arrival time, an orientation of the device 2 with respect to each one of the speakers 4, and to perform multiangulation based on the information relating to the speaker 4 locations. In this example, the processor 6 is configured to continuously compare the received signals with the retrieved fingerprints.

As an example, a sound may be produced by a speaker 4 positioned to the top-left of the device 2. This situation is depicted in figure 2. The sound will then travel towards the device 2 in the direction of the arrow 10. Due to the direction 10 at which the sound approaches the device 2, and the mutual interspacing of the microphones 5-1 - 5-4, the sound will reach each microphone 5-1 - 5-4 at a different arrival time. Accordingly, a difference in arrival time of the sound at a pair of microphones 5-1 - 5-4 can be determined. Said difference in arrival time gives information about the orientation of the device 2 with respect to the speaker 4 that produced the sound. For instance, the sound approaching the device 2 in the direction 10 shown in figure 2, will first reach microphone 5-1 and shortly thereafter microphone 5-4. Somewhat later the sound will reach microphone 5-2 and shortly thereafter microphone 5-3. Next, the processor compares the signal provided by each microphone 5-1 - 5-4, which corresponds to the sound received by that microphone 5-1 - 5-4, to a fingerprint of a sound belonging to a speaker 4. In this example, the comparison is a cross-correlation of the signal with the fingerprint. Cross-correlation involves shifting one input with respect to another by a variable x, and gives as output a scalar value y representing the similarity of the signals given the shift x. When the signal and the fingerprint line up, they are relatively similar, since they include information on the same sound. Thus, at a certain shift $x_{max}$, the cross-correlation gives a maximal value $y_{max}$. The shift $x_{max}$ belonging to the maximal value $y_{max}$ is a measure for the arrival time of the sound at the microphone 5-1 - 5-4 of which the signal was compared to the fingerprint.

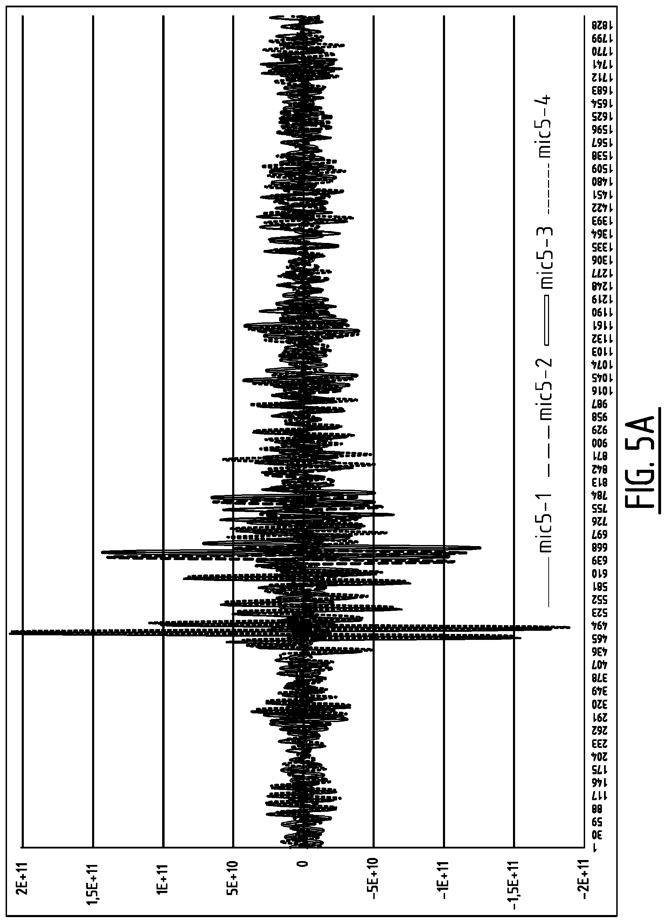

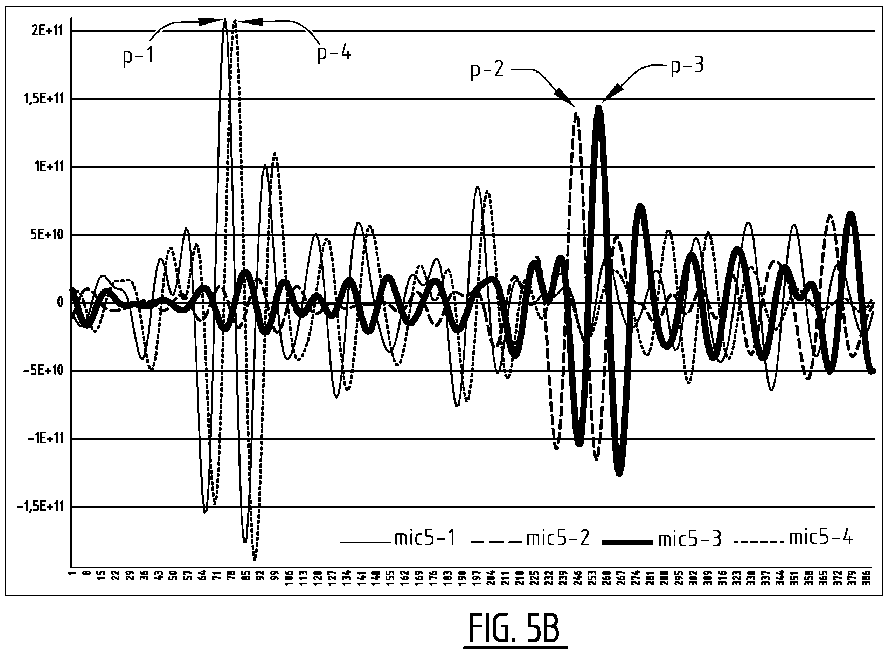

The output y of cross-correlations of a fingerprint with the signals of the four microphones 5-1 - 5-4 has been represented in figures 5A and 5B, wherein figure 5B shows only a part of the data of figure 5A. On the horizontal axes of figures 5A and 5B represent the shift x, whereas the vertical axes represent the output y of the cross-correlation for each microphone 5-1 - 5-4. As can be seen best in figures 5A and 5B, the cross-correlation is relatively small in magnitude, except for clearly distinguishable peaks p-1 - p-4 (see figure 5B), where its magnitude is significantly higher. At these peaks p-1 - p-4, where the cross-correlation signal is maximal, the signal lines up with the fingerprint. The value of the shift x at the peak p-1 - p-4 represents the arrival time of the sound at the microphone 5-1 - 5-4. Figure 5B more clearly shows that the peaks for the signal belonging to each microphone 5-1 - 5-4 occur at a different horizontal position, i. e. at a different shift x representing different arrival times. The peaks p-1 - p-4 match the above described sequence of arrival of the sound at the microphones 5-1 - 5-4, first at microphones 5-1 and 5-4 shortly after each other, and then at microphones 5-2 and 5-3 shortly after each other.

Based on the difference in arrival time for a pair of microphones 5-1 - 5-4 the orientation of the device 2 with respect to the speaker 4 which produced the sound can be determined, based on the information relating to the mutual position of the microphones 5-1 - 5-4. The propagation speed of sound is a relevant parameter when determining the orientation of the device 2. Accordingly, the device 2 is equipped with a temperature sensor 11, which is connected to the processor. The temperature sensor 11 is configured to output a temperature signal corresponding to a measured temperature. The processor 6 determines, based on the temperature signal, a parameter corresponding to the propagation speed of sound at the measured temperature. When the orientation of the device 2 with respect to at least two speakers 4 has been determined, multiangulation is employed to determine the location of the device with respect to the speakers 4 based on the information relating to the speaker locations.

Figure 6 shows the system of figure 1 in a specific situation. In figure 6, the same reference numerals are used as in figure 1 for the same elements. Above it has been explained how differences in arrival times can be used to determine an orientation of the device 2 with respect to a speaker. With reference to figure 6 it will be explained how the orientation of the device 2 with respect to two or more speakers 4 can be used to determine the location of the device 2. Following the procedure above, the orientation of the device 2 is determined with respect to two different speakers, which have been numbered 4-1 and 4-2 in figure 6. Said determined orientation is represented in figure 6 via an angle $\alpha$ for the orientation of the device 2 with respect to the first speaker 4-1, and via an angle $\beta$ for the orientation of the device 2 with respect to the second speaker 4-2. The angles $\alpha$ and $\beta$ are determined with respect to an arrow R indicating the orientation of the device 2 with respect to the space 3. The arrow R can be understood as indicating a front-facing direction of the device 2. When the orientation of the device 2 is determined with respect to the two speakers 4-1 and 4-2, a series of possible locations for the device 2 can be determined. Two possible locations have been shown by drawing the same device 2 in the first possible location 2-1 and in the second possible location 2-2. In reality, more possible locations exist. The possible locations lie on a curve c12. The device 2 is however only shown in two locations 2-1 and 2-2 for the sake of clarity. In the possible locations, and only in the possible locations, the location and orientation of the device 2-1, 2-2 with respect to the speakers 4-1, 4-2 satisfies the determined orientation of the device with respect to the speakers 4-1, 4-2, i.e. the determined angles $\alpha$ and $\beta$. This can be seen from the fact that the angles $\alpha$-1 and $\beta$-1 in the first position of the device 2-1 are equal in magnitude to the angles $\alpha$-2 and $\beta$-2 in the second position of the device 2-2. Since the location of the device 2 is now ambiguously defined, because there are multiple possible locations on the curve c12, a further processing step may be necessary. The amount of possible locations of the device 2 may for instance be reduced by e.g. discarding locations outside the space 3. Additionally or alternatively, the orientation of the device 2 with respect to a further speaker 4-3 can be determined, in the same way as the orientation of the device with respect to the first and second speaker 4-1, 4-2 was determined. Using the orientation of the device 2 with respect to the third speaker 4-3 and that of the second speaker 4-2, a second curve c23 can be drawn, that similar to curve c12 consists of possible locations for the device. The point where the curves c12, c23 overlap, is the location of the device. This thus allows to eliminate all but one possible location. Further, possible locations may chosen as the location of the device by comparing the possible locations with historic and/or recent locations of the device 2, or locations may be eliminated by comparing them with historic and/or recent locations of the device 2.

From this, the skilled person understands that for different situations, a different amount of curves, thus a different amount of speakers 4, can be used for determining the location of the device. In certain situations, e. g. in a particular location of the device 2 with respect to the speakers 4, more than two, such as three or four or even more, speakers 4 may be required. In another particular location, two speakers 4 may be sufficient. The skilled person is able to extend these principles, i.e. those of determining an orientation with respect to a speaker 4, and using the known location of the speaker 4 to determine the location of the device 2, to three dimensional spaces. An example of location determination in a three dimensional space is therefore omitted here for the sake of brevity.

Although the invention has been described hereabove with reference to a number of specific examples and embodiments, the invention is not limited thereto. Instead, the invention also covers the subject matter defined by the claims, which now follow.

## Claims

1. Device (2) for determining its location within a predetermined space (3) using a location determination system (1), the location determination system (1) comprising at least two speakers (4) and the device (2), wherein each speaker (4) is configured to produce a unique predetermined, possibly ultrasonic, sound in said space (3),wherein the device (2) comprises:- at least two microphones (5-1, 5-2, 5-3, 5-4) with a mutual interspacing, each configured to receive sound and each comprising an output (8) for providing a signal corresponding to the sound received;- a memory (7) configured to store for each speaker (4) a fingerprint corresponding to the unique predetermined sound and information relating to a location of that speaker (4); and- a processor (6) connected to the outputs (8),**characterized in that** the processor (6) is configured to:- determine, for each sound, based on a comparison of signals received from the outputs (8) with fingerprints retrieved from the memory (7), a difference between arrival times of the sound at each microphone (5-1, 5-2, 5-3, 5-4) for each pair of said at least two microphones (5-1, 5-2, 5-3, 5-4), and-determine, based on the differences in arrival time, an orientation of the device (2) with respect to each one of the speakers (4), and to perform multiangulation based on the information relating to the speaker (4) locations to determine the location of the device (2) in the space (3).

2. Location determination system (1) for determining a location of the device (2) according to claim 1 within a predetermined space (3), wherein the location determination system (1) comprises at least two speakers (4) and the device (2),
wherein each speaker (4) is configured to produce a unique predetermined, optionally ultrasonic, sound in said space (3).

3. Location determination system (1) according to claim 2, wherein the comparison comprises convolution and/or cross-correlation.

4. Location determination system (1) according to claim 3, wherein determining the difference in arrival time of a sound comprises:

   - determining a first arrival time of said sound at a first microphone (5-1, 5-2, 5-3, 5-4) of said pair based on a first maximal value of the convolution and/or cross-correlation; and
   - determining a second arrival time of said sound at a second microphone (5-1, 5-2, 5-3, 5-4) of said pair based on a second maximal value of the convolution and/or cross-correlation.

5. Location determination system (1) according to any one of the claims 2-4, wherein the processor (6) is further configured to continuously compare the received signals with the retrieved fingerprints.

6. Location determination system (1) according to any one of claims 2-5, wherein the at least two speakers (4) are configured to produce the sounds at regular intervals.

7. Location determination system (1) according to any one of claims 2-6, wherein the processor (6) is connected to each output (8) via a single analog-to-digital converter or via an analog-to-digital converter for each output (8).

8. Location determination system (1) according to any one of the claims 2-7, wherein the at least two microphones (5-1, 5-2, 5-3, 5-4) comprise three or four microphones (5-1, 5-2, 5-3, 5-4).

9. Location determination system (1) according to any one of claims 2-8, wherein the memory (7) is further configured to store information relating to the mutual position of the at least two microphones (5-1, 5-2, 5-3, 5-4).

**10.** Location determination system (1) according to any one of claims 2-9, further including a temperature sensor (11) configured to output a temperature signal corresponding to a measured temperature, wherein the processor (6) is further configured to determine, based on the temperature signal, a parameter corresponding to the propagation speed of sound at the measured temperature, and perform the multiangulation using said parameter.

**11.** Method for determining a location of a device (2) comprising at least two microphones (5-1, 5-2, 5-3, 5-4) with a mutual interspacing, within a predetermined space (3) using a location determination system (1), the method comprising the steps, to be performed in any suitable order, of:

> a) producing at least two unique predetermined, optionally ultrasonic, sounds in said space (3) using at least two respective speakers (4);
> b) for each speaker (4), storing a fingerprint corresponding to the unique predetermined sound and storing information relating to a location of that speaker (4) in a memory (7);
> c) receiving sound, at the at least two microphones (5-1, 5-2, 5-3, 5-4) with a mutual interspacing, and providing a signal corresponding to the sound received at an output (8) of each microphone (5-1, 5-2, 5-3, 5-4);

the method being **characterized by:**

> d) comparing, by a processor (6), signals received from the outputs (8) with fingerprints retrieved from the memory (7), and determining for each sound, based on the comparison, a difference between arrival times of the sound at each microphone (5-1, 5-2, 5-3, 5-4) for each pair of said at least two microphones (5-1, 5-2, 5-3, 5-4), and
> e) determining, by the processor (6), based on the differences in arrival time, an orientation of the device (2) with respect to each one of the speakers (4), and performing multiangulation based on the information relating to the speaker (4) locations to determine the location of the device (2) in the space (3).

**Patentansprüche**

**1.** Vorrichtung (2) zum Bestimmen ihres Standortes innerhalb eines vorgegebenen Raums (3) unter Verwendung eines Standortbestimmungssystems (1), wobei das Standortbestimmungssystem (1) die Vorrichtung (2) sowie zumindest zwei Lautsprecher (4) umfasst, wobei jeder Lautsprecher (4) so ausgebildet ist, dass er in dem Raum (3) einen eindeutigen vorbestimmten, möglicherweise ultraschallbasierten Schall erzeugt, wobei die Vorrichtung (2) aufweist: - zumindest zwei gegenseitig beabstandete Mikrofone (5-1, 5-2, 5-3, 5-4), von denen jedes so ausgebildet ist, dass es Schall empfängt, und jedes einen Ausgang (8) aufweist, zum Bereitstellen eines dem empfangenen Schall entsprechenden Signals; - einen Speicher (7), der so ausgebildet ist, dass er für jeden Lautsprecher (4) einen dem eindeutigen vorbestimmten Schall entsprechenden Fingerabdruck speichert sowie Informationen, die sich auf einen Standort dieses Lautsprechers (4) beziehen; und - einen Prozessor (6), der mit den Ausgängen (8) verbunden ist, **dadurch gekennzeichnet, dass** der Prozessor (6) ausgebildet ist, um: - für jeden Schall, auf Grundlage eines Vergleichs der von den Ausgängen (8) empfangenen Signale mit aus dem Speicher (7) abgerufenen Fingerabdrücken, zwischen den Ankunftszeiten des Schalles an jedem Mikrofon (5-1, 5-2, 5-3, 5-4) für jedes Paar der zumindest zwei Mikrofone (5-1, 5-2, 5-3, 5-4) eine Differenz zu bestimmen, und auf der Grundlage der Differenzen der Ankunftszeit in Bezug auf jeden der Lautsprecher (4) eine Orientierung der Vorrichtung (2) zu bestimmen, und auf der Grundlage der sich auf die Standorte der Lautsprecher (4) beziehenden Informationen eine Multiangulation durchzuführen, um in dem Raum (3) den Standort der Vorrichtung (2) zu bestimmen.

**2.** Standortbestimmungssystem (1) zum Bestimmen eines Standorts der Vorrichtung (2) nach Anspruch 1 innerhalb eines vorgegebenen Raums (3), wobei das Standortbestimmungssystem (1) die Vorrichtung (2) sowie zumindest zwei Lautsprecher (4) umfasst, wobei jeder Lautsprecher (4) so ausgebildet ist, dass er in dem Raum einen eindeutigen vorbestimmten, gegebenenfalls ultraschallbasierten Schall (3) erzeugt.

**3.** Standortbestimmungssystem (1) nach Anspruch 2, wobei der Vergleich eine Faltung und/oder Kreuzkorrelation umfasst.

**4.** Standortbestimmungssystem (1) nach Anspruch 3, wobei das Bestimmen der Differenz hinsichtlich der Ankunftszeit eines Schalls folgende Schritte umfasst:

> - Bestimmen, auf der Grundlage des ersten Maximalwertes der Faltung und/oder Kreuzkorrelation, einer ersten Ankunftszeit des Schalls an einem ersten Mikrofon (5-1, 5-2, 5-3, 5-4) des Paares; und
> - Bestimmen, auf der Grundlage eines zweiten Maximalwerts der Faltung und/oder Kreuzkorrelation, einer zweiten Ankunftszeit des Schalls an einem zweiten Mikrofon (5-1, 5-2, 5-3, 54)

**5.** Standortbestimmungssystem (1) nach einem der Ansprüche 2 bis 4, wobei der Prozessor (6) ferner so ausgebildet ist, dass er die empfangenen Signale kontinuierlich mit den abgerufenen Fingerabdrücken vergleicht.

**6.** Standortbestimmungssystem (1) nach einem der Ansprüche 2 bis 5, wobei die zumindest zwei Lautsprecher (4) so ausgebildet sind, dass sie den Schall in regelmäßigen Abständen erzeugen.

**7.** Standortbestimmungssystem (1) nach einem der Ansprüche 2 bis 6, wobei der Prozessor (6) mit jedem Ausgang (8) über einen einzigen Analog-Digital-Wandler oder über einen Analog-Digital-Wandler für jeden Ausgang (8) verbunden ist.

**8.** Standortbestimmungssystem (1) nach einem der Ansprüche 2 bis 7, wobei die zumindest zwei Mikrofone (5-1, 5-2, 5-3, 5-4) drei oder vier Mikrofone (5-1, 5-2, 5-3, 5-4) umfassen.

**9.** Standortbestimmungssystem (1) nach einem der Ansprüche 2 bis 8, wobei der Speicher (7) ferner so ausgebildet ist, dass er Informationen bezüglich der gegenseitigen Position der zumindest zwei Mikrofone (5-1, 5-2, 5-3, 5-4) speichert.

**10.** Standortbestimmungssystem (1) nach einem der Ansprüche 2 bis 9, ferner aufweisend einen Temperatursensor (11), ausgebildet, um ein einer gemessenen Temperatur entsprechendes Temperatursignal auszugeben, wobei der Prozessor (6) ferner so ausgebildet ist, dass er auf der Grundlage des Temperatursignals einen der Ausbreitungsgeschwindigkeit des Schalls bei der gemessenen Temperatur entsprechenden Parameter bestimmt, und die Multiangulation unter Verwendung dieses Parameters durchführt.

**11.** Verfahren zur Standortbestimmung einer Vorrichtung (2), mit zumindest zwei Mikrofonen (5-1, 5-2, 5-3, 5-4) in einem gegenseitigen Abstand, innerhalb eines vorgegebenen Raumes (3) unter Verwendung eines Standortbestimmungssystems (1), wobei das Verfahren die folgenden, in beliebiger geeigneter Reihenfolge durchzuführenden Schritte aufweist:

a) Erzeugen von zumindest zwei eindeutigen vorbestimmten Schall-Signalen, gegebenenfalls Ultraschall-Signalen, in dem Raum (3) unter Verwendung von zumindest zwei jeweiligen Lautsprechern (4);
b) für jeden Lautsprecher (4), Speichern eines dem eindeutigen vorbestimmten Schall-Signal entsprechenden Fingerabdrucks, und Speichern von Informationen bezüglich eines Standorts dieses Lautsprechers (4) in einem Speicher (7);
c) Empfangen von Schall an den zumindest zwei in gegenseitigem Abstand befindlichen Mikrofonen (5-1, 5-2, 5-3, 5-4) und Bereitstellen eines dem empfangenen Schall entsprechenden Signals an einem Ausgang (8) jedes Mikrofons (5-1, 5-2, 5-3, 5-4);

wobei das Verfahren **gekennzeichnet ist durch** folgende Schritte:

d) Vergleichen der von den Ausgängen (8) empfangenen Signale mit aus dem Speicher (7) abgerufenen Fingerabdrücken durch einen Prozessor (6), und Bestimmen, für jedes Paar der zumindest zwei Mikrofone (5-1, 5-2, 5-3, 5-4), einer Differenz zwischen Ankunftszeiten des Schalls an jedem Mikrofon (5-1, 5-2, 5-3, 5-4) auf der Grundlage des Vergleichs, und
e) Bestimmen, in Bezug auf jeden der Lautsprecher (4), einer Orientierung der Vorrichtung (2) durch den Prozessor (6) auf der Grundlage der Differenzen der Ankunftszeit, und Durchführen einer Multiangulation auf der Grundlage der sich auf die Standorte der Lautsprecher (4) beziehenden Informationen, um den Standort der Vorrichtung (2) in dem Raum (3) zu bestimmen.

**Revendications**

**1.** Dispositif (2) destiné à déterminer sa propre position à l'intérieur d'un espace prédéterminé (3) en utilisant un dispositif de détermination de position (1), le dispositif de détermination de position (1) comprenant au moins deux haut-parleurs (4) et le dispositif (2), dans lequel chaque haut-parleur (4) est configuré de manière à produire un son unique prédéterminé, éventuellement ultrasonore, dans ledit espace (3), dans lequel le dispositif (2) comprend:- au moins deux microphones (5-1, 5-2, 5-3, 5-4) présentant un espacement mutuel, chacun étant configuré de manière à recevoir un son et chacun comprenant une sortie (8) afin de délivrer un signal correspondant au son reçu;- une mémoire (7) configurée de manière à mémoriser pour chaque haut-parleur (4) une empreinte numérique correspondant au son unique prédéterminé et des information se rapportant à une position de ce haut-parleur (4);- et une unité de traitement (6) reliée aux sorties (8), **caractérisé en ce que** l'unité de traitement (6) est configurée de manière à:- déterminer, pour chaque son, sur la base d'une comparaison des signaux reçus à partir des sorties (8) avec des empreintes numériques extraites à partir de la mémoire (7), une différence entre les instants d'arrivée du son au niveau de chaque microphone (5-1, 5-2, 5-3, 5-4) pour chaque paire desdits au moins deux microphones (5-1, 5-2, 5-3, 5-4), et déterminer, sur la base des différences sur les instants d'arrivée, une orientation du dispositif (2) par rapport à chacun des haut-parleurs (4), et exécuter une multi-angulation sur la base des informations se rapportant aux positions du haut-parleur (4) afin de déterminer la position du dispositif (2) dans l'espace (3).

2. Dispositif de détermination de position (1) destiné à déterminer une position du dispositif (2) selon la revendication 1, à l'intérieur d'un espace prédéterminé (3), dans lequel le dispositif de détermination de position (1) comprend au moins deux haut-parleurs (4) et le dispositif (2),

   dans lequel chaque haut-parleur (4) est configuré de manière à produire un son, en variante, ultrasonique, unique prédéterminé, dans ledit espace (3).

3. Dispositif de détermination de position (1) selon la revendication 2, dans lequel la comparaison comprend la convolution et/ou la corrélation croisée.

4. Dispositif de détermination de position (1) selon la revendication 3, dans lequel la détermination de la différence sur l'instant d'arrivée d'un son comprend:

   - la détermination d'un premier instant d'arrivée dudit son au niveau d'un premier microphone (5-1, 5-2, 5-3, 5-4) de ladite paire sur la base d'une première valeur maximale de la convolution et/ou de la corrélation croisée; et
   - la détermination d'un second instant d'arrivée dudit son au niveau d'un second microphone (5-1, 5-2, 5-3, 5-4) de ladite paire sur la base d'une seconde valeur maximale de la convolution et/ou de la corrélation croisée.

5. Dispositif de détermination de position (1) selon l'une quelconque des revendications 2 à 4, dans lequel l'unité de traitement (6) est, en outre, configurée de manière à comparer en continu les signaux reçus aux empreintes numériques extraites.

6. Dispositif de détermination de position (1) selon l'une quelconque des revendications 2 à 5, dans lequel les au moins deux haut-parleurs (4) sont configurés de manière à produire les sons à intervalles réguliers.

7. Dispositif de détermination de position (1) selon l'une quelconque des revendications 2 à 6, dans lequel l'unité de traitement (6) est reliée à chaque sortie (8) par l'intermédiaire d'un seul convertisseur analogique-numérique ou par l'intermédiaire d'un convertisseur analogique-numérique pour chaque sortie (8).

8. Dispositif de détermination de position (1) selon l'une quelconque des revendications 2 à 7, dans lequel les au moins deux microphones (5-1, 5-2, 5-3, 5-4) comprennent trois ou quatre microphones (5-1, 5-2, 5-3, 5-4).

9. Dispositif de détermination de position (1) selon l'une quelconque des revendications 2 à 8, dans lequel la mémoire (7) est, en outre, configurée de manière à mémoriser les informations se rapportant à la position mutuelle des au moins deux microphones (5-1, 5-2, 5-3, 5-4).

10. Dispositif de détermination de position (1) selon l'une quelconque des revendications 2 à 9, comportant, en outre, un capteur de température (11) configuré de manière à délivrer un signal de température correspondant à une température mesurée, dans lequel l'unité de traitement (6) est, en outre, configurée de manière à déterminer, sur la base du signal de température, un paramètre correspondant à la vitesse de propagation du son à la température mesurée, et à exécuter la multi-angulation en utilisant ledit paramètre.

11. Procédé de détermination d'une position d'un dispositif (2) comprenant au moins deux microphones (5-1, 5-2, 5-3, 5-4) présentant un espacement mutuel, à l'intérieur d'un espace prédéterminé (3) en utilisant un dispositif de détermination de position (1), le procédé comprenant les étapes, pouvant être exécutées suivant ordre approprié quelconque, de:

   a) production d'au moins deux sons, en variante, ultrasoniques, prédéterminés uniques, dans ledit espace (3) en utilisant au moins deux haut-parleurs respectifs (4);
   b) pour chaque haut-parleur (4), mémorisation d'une empreinte numérique correspondant au son unique prédéterminé et mémorisation d'informations se rapportant à une position de ce haut-parleur (4) dans une mémoire (7);
   c) réception du son, au niveau des au moins deux microphones (5-1, 5-2, 5-3, 5-4) présentant un espacement mutuel, et fourniture d'un signal correspondant au son reçu sur une sortie (8) de chaque microphone (5-1, 5-2, 5-3, 5-4);

   le procédé étant **caractérisé par**:

   d) la comparaison, par une unité de traitement (6), des signaux reçus à partir des sorties (8) avec des empreintes numériques extraites de la mémoire (7), et la détermination pour chaque son, sur la base de la comparaison, d'une différence entre les instants d'arrivée du son à chaque microphone (5-1, 5-2, 5-3, 5-4) pour chaque paire desdits au moins deux microphones (5-1, 5-2, 5-3, 5-4), et

e) la détermination, par l'unité de traitement (6), sur la base des différences d'instants d'arrivée, d'une orientation du dispositif (2) par rapport à chacun des haut-parleurs (4), et l'exécution de la multi-angulation sur la base des informations se rapportant aux positions de haut-parleur (4) afin de déterminer la position du dispositif (2) dans l'espace (3).

**FIG. 1**

**FIG. 2**

FIG. 3A

FIG. 3B

FIG. 4

EP 4 073 539 B1

EP 4 073 539 B1

FIG. 5A

FIG. 5B

EP 4 073 539 B1

FIG. 6

EP 4 073 539 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- BE 1024053
- WO 2014102931 A1
- EP 2565667 A1
- WO 2012137017 A2